# FASCICULE DE BREVET EUROPEEN

(11) **EP 3 670 271 B1**
(45) Date de publication et mention de la délivrance du brevet: **10.05.2023**
(21) Numéro de dépôt: 19212972.4
(22) Date de dépôt: 02.12.2019
(51) Int. Cl.: B60R 11/04

(54) **DISPOSITIF DE DÉPLOIEMENT D'UNE CAMÉRA POUR VÉHICULE MOTORISÉ**
BEWEGUNGSVORRICHTUNG EINER KAMERA FÜR EIN MOTORGETRIEBENES FAHRZEUG
DEPLOYMENT DEVICE OF A CAMERA FOR A MOTOR-PROPELLED VEHICLE

(30) Priorité: 18.12.2018 FR 1873146
(43) Date de publication de la demande: 24.06.2020
(73) Titulaire: U-Shin France, 94140 Alfortville (FR)
(72) Inventeur: BIDAUT, Grégoire, 10044 Pianezza (IT)
(74) Mandataire: Germain Maureau

(56) Documents cités:
- EP-A1- 2 054 572
- EP-A1- 2 524 494
- WO-A1-2018/076925
- DE-A1-102008 012 033
- DE-A1-102010 060 573
- DE-A1-102016 113 410
- DE-A1-102016 119 433

## Description

### Domaine technique

L'invention se rapporte à un dispositif de déploiement d'une caméra pour véhicule motorisé.

La caméra est disposée à l'arrière du véhicule préférentiellement mais peut tout à fait être utilisée ailleurs pour une caméra avant ou sur rétroviseur latéral, par exemple au niveau du logo arrière du véhicule. Son déploiement d'une position rétractée à une position de capture s'effectue par un activateur, par exemple la position marche arrière du véhicule.

Lors de la position de capture de la caméra, ladite caméra enregistre les images de l'environnement extérieur du véhicule et les retransmets instantanément sur un écran disposé sur le tableau de bord de manière à ce que le conducteur soit alerté par tout danger suite à une manoeuvre dont le conducteur ne peut prendre connaissance avec les moyens classiques d'un véhicule, par exemple lors d'une manoeuvre de marche arrière du véhicule.

### Art antérieur

Un dispositif de déploiement d'une caméra pour véhicule motorisé est connu de l'art antérieur. Un dispositif à double fonction d'ouverture d'un verrou lors de l'actionnement d'une poignée et, si nécessaire, d'utilisation d'une caméra pour capturer l'extérieur du véhicule est connu dans EP 2054572. Pour une réalisation optimale de ces deux tâches et pour une formation peu encombrante, il est proposé de former un trou dans la paroi arrière dans une coque de support de réception de poignée à laquelle est fixé le boîtier d'un module. Dans le boîtier du module, la caméra est montée de manière pivotante via un support de caméra entre une position rétractée et une position étendue et guidée en translation. Sur le boîtier du module se trouve également un lecteur et une transmission pour un mouvement de translation rotationnelle de la caméra.

Un autre dispositif pour véhicule automobile est connu dans EP 2524494, comprenant une unité de caméra pouvant être amenée dans une position de repos et une position active, et un élément de protection, pouvant être transféré dans une position fermée et dans une position ouverte, l'unité de caméra étant dans la position de repos inaccessible de l'extérieur derrière l'élément de protection lorsque l'élément de protection est dans la position fermée, et l'unité de caméra est dans la position active pour l'acquisition d'image lorsque l'élément de protection est dans la position ouverte, et comprenant en outre un bras pour déplacer l'unité de caméra et l'élément de protection. L'unité de caméra et l'élément de protection sont articulés de manière mobile l'un sur l'autre sur ledit dispositif L'invention concerne en outre un véhicule, en particulier un véhicule automobile, comprenant un tel dispositif. Le document WO 2018/076925 A1 divulgue un dispositif comprenant une caméra conforme au préambule de la revendication 1.

Ces dispositifs connus de l'art antérieur présentent des inconvénients. Les dispositifs connus de l'art antérieur prennent un espace plus important compte tenu de la position de l'actionneur. Les actionneurs exercent également plus de contrainte pour déplacer une telle caméra du fait du type de mouvement exercé par l'actionneur, par exemple un mouvement rotatoire.

### Présentation de l'invention

Cette invention vise à remédier à ces inconvénients en fournissant un dispositif pour véhicule motorisé comprenant une caméra, le dispositif comprenant les caractéristiques de la revendication 1.

Conformément à l'invention, les bielles sont reliées entre elles par l'intermédiaire d'un support par des moyens de fixation, et idéalement, les moyens de fixation sont des tiges aptes à s'insérer dans des évidements traversant le support. Dans un autre mode de réalisation préféré, les bielles sont reliées au cache par des moyens de fixation et idéalement, les moyens de fixation sont des tiges aptes à s'insérer dans des évidements traversant le cache. Ceci permet de transmettre efficacement le mouvement de la caméra au cache.

De manière préférentielle, les moyens de fixation sont aptes à se déplacer selon un chemin déterminé et idéalement, le chemin a une forme de L. Cette conformation permet de transformer le déplacement longitudinal de la caméra en un mouvement dans une direction transversale des parties du cache.

Dans un autre mode de réalisation préféré, le cache se divise en deux parties en son milieu lorsqu'il passe d'une position fermée à une position ouverte. Cela permet d'optimiser le déport des parties de cache.

Idéalement, l'extrémité de contact de l'une des parties du cache a une forme en V et l'autre extrémité de contact de l'autre partie du cache a une forme complémentaire à la forme en V de sorte que les deux extrémités des parties s'emboîtent lors de la position fermée dudit cache. En outre, on favorise l'accostage des deux parties.

De manière préférentielle, le déplacement du dispositif est effectué par un activateur tel que la position marche arrière d'un véhicule ou un bouton d'activation. L'avantage étant une commande depuis l'habitacle du véhicule.

D'une autre manière préférentielle, la caméra se transpose de la position rétractée à la position de capture par un mouvement de translation apte à faire passer la caméra à travers un orifice de logo de véhicule et encore d'une autre manière préférentielle, le cache est confondu avec un logo de véhicule et apte à se diviser en deux parties afin de permettre à la caméra de passer de la position rétractée à la position de capture simultanément à la division des deux parties.

Idéalement, un joint est interposé entre le dispositif et un logo de véhicule, le joint reposant sur une surface plane d'une tôle métallique appartenant à un ouvrant arrière du véhicule. Cela améliore l'étanchéité.

Encore idéalement, la caméra est apte à être inclinée selon un troisième axe perpendiculaire par rapport au déplacement de la caméra par l'intermédiaire d'un dispositif de réglage. Cela permet de s'adapter aux différentes hauteurs de véhicules, sans impacter la visibilité.

Selon un mode de réalisation, le troisième axe est confondu avec ou est parallèle au premier axe.

Dans une autre variante, la caméra est disposée entre le moteur et le cache. Cela permet d'optimiser l'encombrement radial.

Encore dans une autre variante, le moteur est disposé autour de la caméra et sur un plan perpendiculaire à l'axe de déplacement de la caméra, cette dernière et le moteur étant coplanaires. Cela permet d'optimiser l'encombrement longitudinal.

Chaque disposition de l'actionneur a son avantage selon le type de véhicule équipé d'un tel dispositif. Le dispositif peut tout à fait être utilisé pour une application de type rétroviseur avec caméra.

Le déplacement longitudinal des deux parties du cache lors de son ouverture permet à la caméra de se déplacer simultanément vers sa position de capture sans réduire son champ de vision, les parties du cache n'étant plus visible de l'extérieur du véhicule lors de leurs positions ouvertes.

Lors de la position fermée du cache, celui-ci a une fonction d'antivol et de protection de la caméra contre l'environnement extérieur (poussière, boue, eau...). Cette conformation a pour but d'optimiser la protection de la caméra lors de sa position rétractée.

### Présentation des figures

L'invention sera décrite plus en détails à travers les différentes figures présentées ci-dessous, ce qui facilitera sa compréhension.
La figure 1 représente une vue en perspective de dessus du dispositif conformément à l'invention sans l'actionneur.
La figure 2a représente une vue en perspective du dessous du dispositif conformément à l'invention sans l'actionneur.
La figure 2b représente une vue en coupe des chemins de la figure 2b conformément à l'invention sans l'actionneur.
La figure 3 représente une vue en coupe de la figure 1 conformément à l'invention sans l'actionneur.
La figure 4 représente une vue en perspective d'une partie du dispositif de la figure 1 conformément à l'invention.
La figure 5a est une vue de face avant d'une partie du dispositif conformément à l'invention.
La figure 5b est une vue de face arrière de la figure 5a conformément à l'invention.
La figure 6a est une vue en perspective de la partie visible du dispositif de l'extérieur du véhicule conformément à l'invention.
La figure 6b est une vue en perspective de derrière de la figure 6a conformément à l'invention sans l'actionneur.
La figure 7 est une vue de la caméra sur son support, conformément à l'invention.
La figure 8 est une vue de côté du dispositif avec l'actionneur positionné au-dessus, conformément à l'invention.
La figure 9 est une vue en perspective du dispositif avec l'actionneur positionné au-dessus et la caméra en position de capture.
La figure 10 est une vue de dessus du dispositif avec l'actionneur positionné co-axialement au déplacement de la caméra.

Il est entendu que la description des modes de réalisation suivants est en aucun cas limitative de la portée de l'invention, c'est-à-dire que les combinaisons ou les modifications simples des modes de réalisation présentées ci-après sont également couverts par la portée de l'invention.

### Description détaillée de l'invention

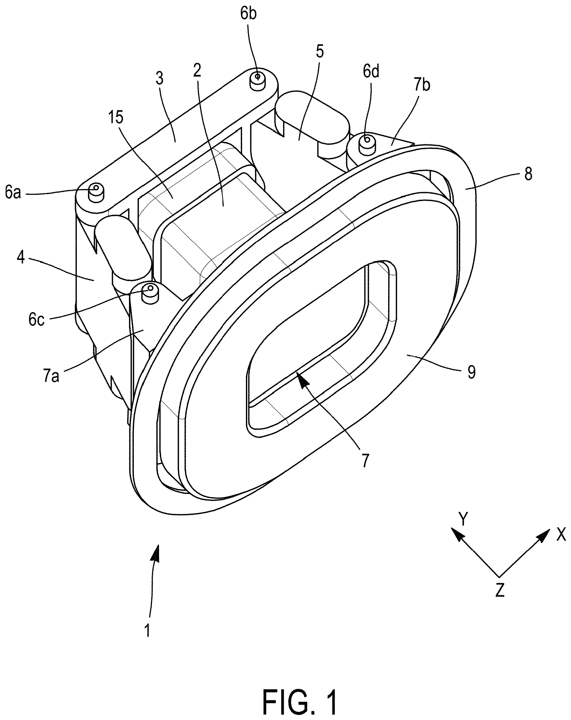

La figure 1 montre le dispositif 1 comprenant une caméra 2 montée sur un support 3 dans sa position rétractée. Ladite caméra 2 est également insérée dans un support secondaire 15 de forme carré présentant une cavité centrale permettant l'insertion de la caméra 2 de forme quelconque, préférentiellement cubique.

Le support secondaire 15 est inséré dans le support 3 par un évidement de forme carré adapté pour recevoir le support secondaire 15. Le support secondaire 15, associé au support 3 permet une inclinaison de la caméra 2 avant le montage du dispositif 1. L'inclinaison de la caméra 2 permet d'adapter son champ de vision au véhicule dont le dispositif 1 est intégré. En effet, selon le type de véhicule, l'inclinaison de la caméra 2 ne sera pas la même du fait de la différence de hauteur de chaque véhicule. Ainsi, l'inclinaison de la caméra 2 adaptée selon le véhicule permet au conducteur de bénéficier du champ de vision le plus optimal de l'extérieur du véhicule.

Deux bielles 4 et 5 sont reliées au support 3 par des moyens de fixation 6a et 6b. La bielle 4 est reliée par l'une de ses extrémités à l'une des extrémités du support 3 par le moyen de fixation 6a traversant un évidement reliant ainsi les deux pièces 3 et 4. La bielle 5 est reliée par l'une de ses extrémités à l'autre extrémité du support 3 par le moyen de fixation 6b traversant un évidement reliant ainsi les deux pièces 3 et 5.

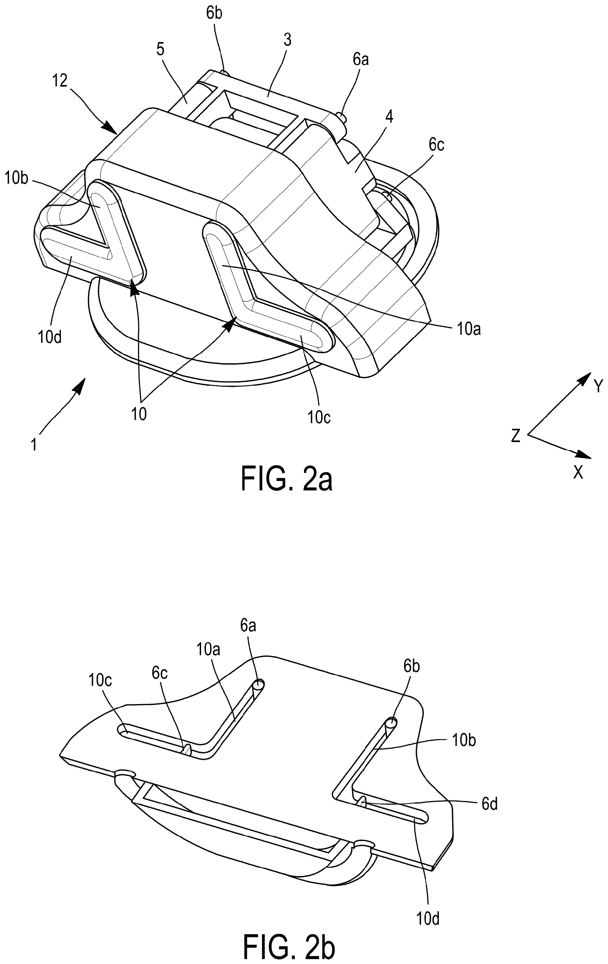

Un cache 7 est divisé en deux parties 7a et 7b. Lors de la position fermée du cache, les parties 7a et 7b sont complémentaires et s'emboitent l'une dans l'autre par leurs extrémités et forment une seule partie 7. La bielle 4 est reliée à l'autre de ses extrémités à la partie 7a du cache 7 par le moyen de fixation 6c traversant un évidement reliant ainsi les deux pièces 4 et 7a et la bielle 5 est reliée à l'autre de ses extrémités à la partie 7b du cache 7 par le moyen de fixation 6d traversant un évidement reliant ainsi les deux pièces 5 et 7b. Ces moyens de fixation 6 seront aptes à se déplacer selon un chemin déterminé 10 sous forme de cavités comme présenté dans les figures 2a et 2b.

Lesdits moyens de fixation 6a et 6b sont des tiges aptes à s'insérer dans des évidements traversant ledit support 3 et lesdits moyens de fixation 6c et 6d sont des tiges aptes à s'insérer dans des évidements traversant ledit cache 7. Un joint 8 en polyuréthane, ou en un autre matériau ayant une fonction d'étanchéité est inséré entre la tôle métallique (non représentée) du véhicule et un logo 9 de telle sorte à renforcer l'étanchéité et la résistance mécanique du dispositif 1.

La figure 2a montre la face inférieure du dispositif 1 et les chemins 10 que chaque extrémité de moyen de fixation 6 emprunte lors de l'activation du dispositif 1. Les moyens de fixation 6a et 6b empruntent respectivement les chemins 10a et 10b tandis que les moyens de fixation 6c et 6d empruntent respectivement les chemins 10c et 10d.

Les chemins 10a et 10b sont respectivement perpendiculaires par rapport aux chemins 10c et 10d. Les moyens de fixation 6a et 6b sont en butée respectivement dans les chemins 10a et 10b à leur extrémité supérieure lors de la position rétractée de la caméra et se déplacent lors du déploiement de la caméra à sa position de capture jusqu'à la butée de l'extrémité inférieure des chemins 10a et 10b. Les moyens de fixations 6c et 6d ne sont pas en butée respectivement sur les chemins 10c et 10d lors de la position rétractée de la caméra comme représenté dans la figure 2b pour garder un angle inférieur à 90° entre le cache et les bielles 4 et 5 afin de fluidifier l'ouverture du cache lors de l'activation du dispositif. Cependant, lors de la position de capture de la caméra, les moyens de fixation 6c et 6d sont en butée distalement respectivement aux chemins 10c et 10d.

Les chemins 10a et 10c ainsi que les chemins 10b et 10d ont tous deux une forme de L formant une cavité pour recevoir les extrémités des moyens de fixation 6 appropriés et principalement pour guider lesdites extrémités de manière stable. Il est entendu que la forme desdits chemins est une forme en L dans n'importe quel sens géométrique.

La figure 2b montre une vue en coupe transversale des chemins 10a à 10d. Lesdits chemins formant cavité dans un réceptacle 12. Lesdites cavités reçoivent les moyens de fixation 6 permettant le déplacement de la caméra 2 et du cache 7 par l'intermédiaire des bielles 4 et 5 non représentés sur cette figure. Plus en détail, une des extrémités des moyens de fixation 6a et 6b est imbriquée respectivement dans les chemins 10a et 10b et une des extrémités des moyens de fixation 6c et 6d est imbriquée respectivement dans les chemins 10c et 10d.

Les moyens de fixation 6a et 6b se déplacent respectivement dans les cavités des chemins 10a et 10b selon un mouvement en translation, parallèle au mouvement de la caméra 2 et les moyens de fixation 6c et 6d se déplacent respectivement dans les cavités des chemins 10c et 10d selon un mouvement en translation, perpendiculaire au mouvement de la caméra 2 et parallèle au mouvement du cache 7.

Les cavités ont une certaine profondeur permettant une insertion des extrémités des moyens de fixation ainsi qu'une largeur suffisante pour recevoir les extrémités des moyens de fixation ayant une taille déterminée tout en tolérant le déplacement des extrémités des moyens de fixation dans ces cavités.

Il est à noter qu'il y a une symétrie par rapport au plan longitudinal et au plan transversal de chaque chemin en forme de L.

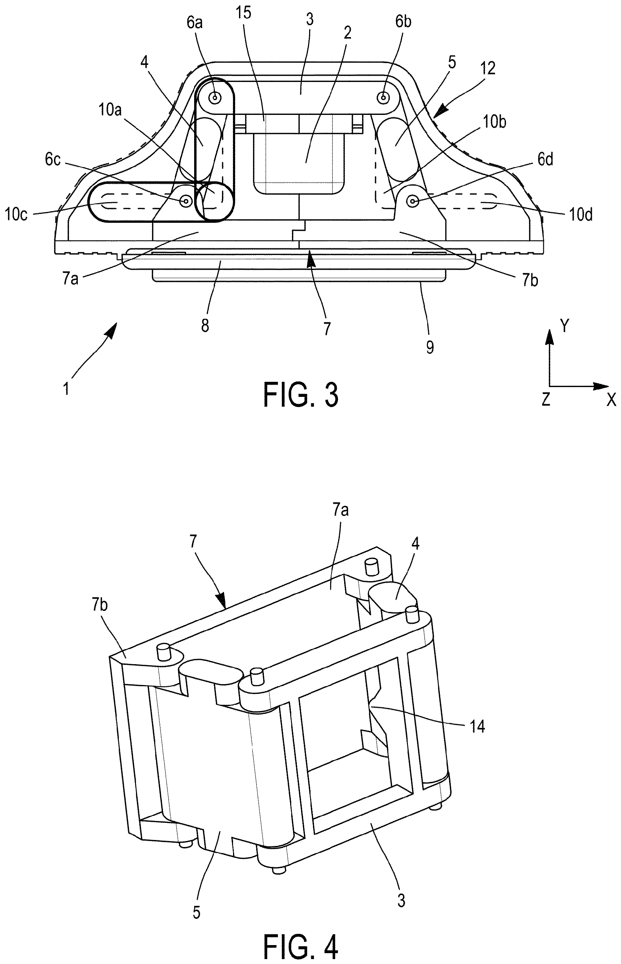

La figure 3 montre le dispositif 1 en coupe dans lequel est représenté une caméra 2 montée sur son support 3, les bielles 4 et 5 ainsi que le cache 7 et les moyens de fixation 6a à 6d. Lors de l'activation du dispositif 1, la caméra 2 se déplace d'une position rétractée à une position de capture simultanément avec le cache 7 d'une position fermée à une position ouverte.

Le déplacement en translation des moyens de fixations 6a et 6b le long des chemins 10a et 10b entraine la transposition de la caméra 2 selon l'axe Y (cf. fig.1) tandis que simultanément, les moyens de fixation 6c et 6d se déplacent en translation le long des chemins 10c et 10d entraînant le déplacement longitudinal des parties 7a et 7b du cache 7 et donc l'ouverture du cache 7 selon l'axe X.

La caméra 2 en position de capture, traverse l'ouverture créée par le cache ainsi que le joint 8 en polyuréthane, ou en un autre matériau ayant une fonction d'étanchéité, et la tôle métallique du véhicule afin de capturer les images situées à l'extérieur du véhicule.

Lors de la rétractation de la caméra 2 dans sa position rétractée selon l'axe Y, les moyens de fixation 6a et 6b retournent dans leur position initiale telle que représentée sur la figure 3 en empruntant les mêmes chemins 10a et 10b tandis que, simultanément, les moyens de fixation 6c et 6d retournent également dans leur position initiale telle que représentée sur cette même figure en empruntant les mêmes chemins 10c et 10d entraînant ainsi le déplacement en position fermée des parties 7a et 7b du cache 7 selon l'axe X.

Lors de la position inactive du dispositif 1, les parties 7a et 7b forment un unique cache 7 de telle sorte que la position fermée a une fonction d'antivol 11 et de protection contre les éléments tels que la poussière, l'eau ou la glace de la caméra 2 du fait de la complémentarité des extrémités des parties 7a et 7b.

Dans une variante de l'invention préférée, le dispositif 1 se situe à l'arrière du véhicule et plus particulièrement au centre du logo 9 dudit véhicule, de telle sorte que le cache 7 s'ouvre au niveau du centre dudit logo 9 et donc que la caméra 2 se transpose de sa position rétractée à sa position de capture par un mouvement de translation apte à faire passer ladite caméra 2 à travers un orifice dudit logo 9 de véhicule.

Dans une autre variante de l'invention, ledit logo 9 est confondu avec le cache 7 et apte à se diviser en deux parties afin de permettre à la caméra 2 de passer de la position rétractée à la position de capture simultanément à la division en deux parties.

La figure 4 montre une partie du dispositif 1 dans lequel est représenté le support 3 recevant la caméra (non représentée) par l'intermédiaire du support secondaire (non représenté), le cache 7 ainsi que les bielles 4 et 5 reliant le support 3 et le cache 7 à l'aide de moyens de fixation 6.

Le dispositif 1 étant dans sa position rétractée, le cache 7 est en position fermée et la partie du dispositif 1 est en forme de trapèze. L'évidement du support 3, en forme de carré permet d'imbriquer le support secondaire 15 à l'aide de supports de fixation 14 situés de part et d'autre sur les faces intérieures des branches verticales du support 3.

L'évidement, permettant d'imbriquer le support secondaire 15, qui lui-même supporte la caméra 2, est centré sur le cache 7, de par la forme de trapèze de cette partie du dispositif 1, ce qui induit une transposition de la caméra 2 au milieu du cache 7 lors de son ouverture part la division des parties 7a et 7b dudit cache 7.

Les bielles 4 et 5 ont une forme de croix, dont les parties reliées au support 3 et à chaque partie 7a et 7b du cache 7 ont un évidement recevant les moyens de fixation 6 et présentant une longueur supérieure aux autres parties desdites bielles 4 et 5.

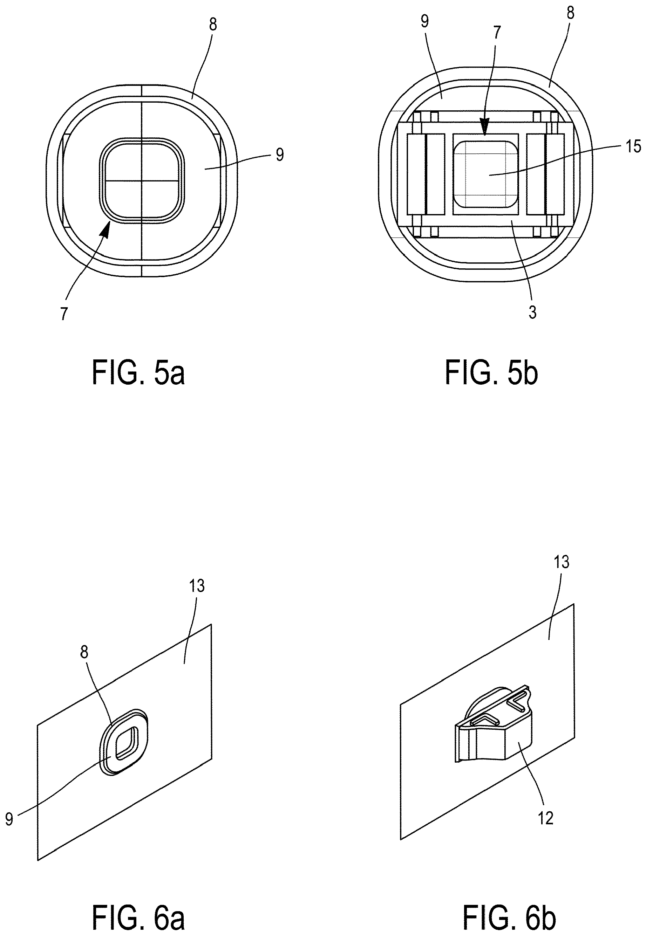

La figure 5a montre le cache 7 ainsi que le joint 8 en polyuréthane, ou en un autre matériau ayant une fonction d'étanchéité, et le logo 9 du dispositif 1 pouvant être de forme quelconque telle qu'un carré, rectangle, cercle, losange, triangle, et autres formes compatibles.

L'ouverture du cache 7 par la division des parties 7a et 7b s'effectue en son centre comme illustré sur cette figure. Le joint 8 en polyuréthane ou en un autre matériau ayant une fonction d'étanchéité, est fixé entre la tôle métallique (non représentée) et le logo 9. Ce joint 8 est disposé autour dudit logo 9. L'orifice du logo 9 du véhicule est centré sur le milieu du cache 7 de manière à laisser passer la caméra lors de l'activation du dispositif 1 par l'ouverture du cache 7 et à travers l'orifice du logo 9 car, comme expliqué dans la figure 4, la caméra est centrée sur le cache 7.

La figure 5b montre une vue de derrière de la figure 5a. Le support secondaire 15 de la caméra est imbriqué dans le support 3 et centré sur le cache 7 ainsi que l'orifice du logo 9. La partie du dispositif 1 illustrée dans la figure 4 ne s'étend pas au-delà du joint 8 lors de la position rétractée de la caméra.

La figure 6a montre la partie du dispositif 1 visible de l'extérieur du véhicule. Un joint 8 en polyuréthane, ou en tout autre matériau ayant une fonction d'étanchéité se situe entre la tôle métallique 13 de l'ouvrant tel que le coffre ou un hayon par exemple d'un véhicule et le logo 9. Le joint 8 protège le dispositif 1 par une étanchéité et une résistance mécanique accrue qui pourraient être altérées entre la tôle mécanique 13 et le logo 9 du véhicule en cas d'absence dudit joint 8.

Lors de la position de capture de la caméra, la caméra traverse par transposition le cache 7 lors de son ouverture ainsi que l'orifice du logo 9 de telle sorte à obtenir un champ de vision optimal de l'environnement extérieur du véhicule dans un mode de réalisation préféré.

La figure 6b montre une vue de derrière de la figure 6a. Un réceptacle 12 comprenant le dispositif 1 est fixé à la tôle mécanique 13 du véhicule. Le réceptacle 12 vise à protéger le dispositif 1 et également à former les chemins 10 par la formation de cavités dans ce réceptacle 12 visant à recevoir les moyens de fixation 6. Sur cette figure, seuls les chemins de la face supérieure du réceptacle sont visibles, il est entendu que les mêmes chemins sont présents sur la face inférieure dudit réceptacle 12 c'est à dire qu'il y a une symétrie par rapport au plan longitudinal et au plan transversal de chaque chemin en forme de L.

Le réceptacle 12 s'étend au-delà du joint en polyuréthane, ou en un autre matériau ayant une fonction d'étanchéité pour recevoir les parties du cache lors de sa position ouverte. Le réceptacle a donc la forme des pièces assemblées intérieures à ce réceptacle 12, permettant ainsi de limiter l'espace couvert par le dispositif à l'intérieur du véhicule.

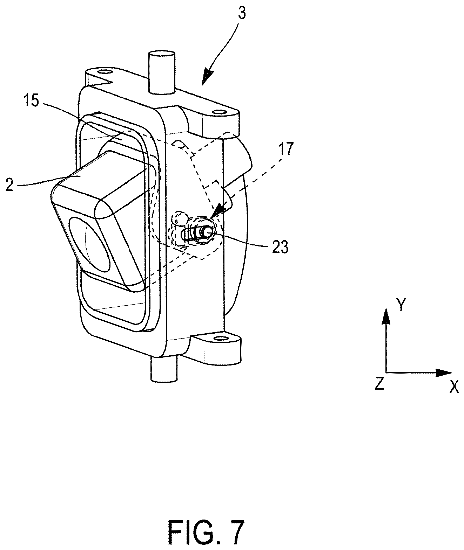

La figure 7 montre la caméra 2 montée sur son support secondaire 15, lui-même monté sur le support 3. Sur le support 3 est présent un dispositif de réglage 17 de l'inclinaison de la caméra 2 selon un axe perpendiculaire (X) par rapport à l'axe de déplacement de la caméra 2 de sa position rétractée à sa position de capture. La caméra 2 peut être pré-inclinée avec un angle d'inclinaison déterminé selon le type de véhicule équipé du dispositif 1 de la présente invention. Le réglage de l'inclinaison de la caméra 2 est effectué avant montage final de la caméra 2 dans le dispositif 1. En effet, un ergot de réglage 23 est disposé sur le support secondaire 15 et se prolongeant à travers une branche latérale du support 3 afin de régler manuellement l'inclinaison de la caméra 2.

L'ergot de réglage 23 est apte à être déplacer selon un axe transversal (Z) parallèle à la direction de déplacement de la caméra 2 de sa position de repos à sa position de capture de par un évidement créé à travers la branche latérale du support 3. On peut aussi motoriser le réglage de la caméra pour plus de flexibilité de l'utilisateur.

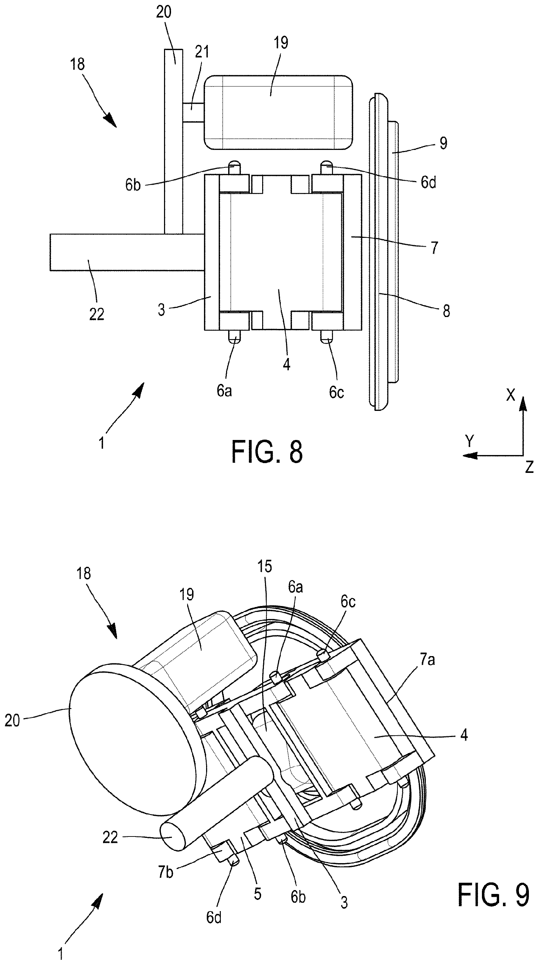

La figure 8 montre une vue de côté du dispositif 1 avec une schématisation d'un actionneur 18 positionné au-dessus de l'axe de déplacement de la caméra 2. Sur cette figure, la caméra 2 est en position rétractée.

L'actionneur 18 comprend un moteur 19 relié à une roue dentée 20 (dents non représentées) par l'intermédiaire d'une came 21. La roue dentée 20 est en contact avec une vis dentée 22 (dents non représentées). La vis dentée 22 est fixée à l'arrière du support 3, c'est-à-dire du côté opposé à l'insertion de la caméra 2 dans le support. La liaison entre la vis 22 et le support 3 doit être libre en rotation mais solidaire en translation, une liaison de type baïonnette serait un mode de réalisation préféré.

Plus précisément, la vis dentée 22 est fixée au centre du support 3. On voit que lors de la position rétractée de la caméra 2, la roue dentée 20 est située proche du support 3. Le moteur 19 est disposé perpendiculairement à la roue dentée 20 par l'intermédiaire de la came 21 et parallèle au déplacement de la caméra 2. La vis dentée 22 est disposée perpendiculairement à la roue dentée 20 et parallèlement au déplacement de la caméra 2.

L'actionneur 18 est inséré dans un sous-module (non représenté) fixé au réceptacle 12 ou faisant partie de ce dernier par exemple pour améliorer l'étanchéité.

La figure 9 montre une vue en perspective du dispositif 1 avec un actionneur 18 positionné au-dessus de l'axe de déplacement de la caméra 2. Sur cette figure, la caméra 2 est en position de capture et la caméra est inclinée selon un angle déterminé. Dans la position de capture de la caméra 2, la roue dentée 20 est située à l'opposé du support 3 contrairement lors de la position rétractée de la caméra 2 comme décrit dans la figure 8, toujours en contact avec la vis dentée 22.

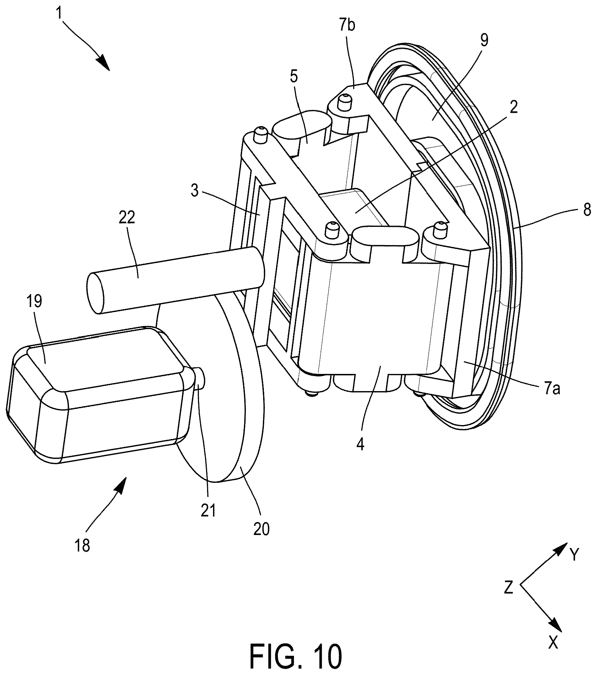

La figure 10 montre une vue schématique de haut d'un mode de réalisation alternatif du dispositif 1 dans lequel un actionneur 18 est positionné co-axialement au déplacement de la caméra 2. Sur cette figure, la caméra est en position rétractée. On voit que l'actionneur 18 est disposé sur le même axe que l'axe de déplacement de la caméra 2. La vis dentée 22 est fixée au support 3 auquel est insérée la caméra 2.

Le cache 7 est relié au support 3 par l'intermédiaire des bielles 4 et 5. Plus précisément, la partie du cache 7a est reliée au support 3 par l'intermédiaire de la bielle 4 et la partie du cache 7b est reliée au support 3 par l'intermédiaire de la bielle 5. On voit également un logo 9 fixé sur la tôle 13 d'un véhicule automobile. L'actionneur 18 est inséré dans un sous-module (non représenté) fixé au réceptacle 12.

Dans le paragraphe suivant, le fonctionnement de l'invention est détaillé.

Lorsque le moteur 19 est activé, par exemple lors de l'activation de la marche arrière d'un véhicule automobile, le moteur 19 fait tourner la roue dentée 20 dans le sens horaire par l'intermédiaire d'une came 21. Puis, la première roue dentée 20, étant en mouvement et en contact avec une vis dentée 22, entraîne en mouvement cette vis dentée 22 dans le sens anti horaire par exemple en se déplaçant le long de cette vis dentée 22, ce qui entraîne la poussée du support 3 auquel la vis dentée 22 est fixée et donc le déplacement de la caméra 2 de sa position rétractée à sa position de capture selon un mouvement translatoire.

Lors du retour de la caméra 2 dans sa position initiale, c'est-à-dire lors du déplacement de la caméra 2 de sa position de capture à sa position rétractée, la roue dentée 20 tourne dans le sens anti horaire et entraine le mouvement de la vis dentée 22 dans le sens horaire par le déplacement de la roue dentée 20 dans le sens inverse au sens de déplacement de la roue dentée 20 lors de l'activation de la marche arrière d'un véhicule automobile. Cela entraine donc le retour de la caméra 2 dans sa position initiale de par une traction exercée par la vis dentée 22 sur le support 3 duquel ladite vis 22 est solidaire. Bien entendu les sens de rotation peuvent être inversés.

## Revendications

1. Dispositif (1) pour véhicule motorisé comprenant une caméra (2) montée sur un support (3), ladite caméra (2) étant transposable d'une position rétractée à une position de capture à travers un cache (7) par un actionneur (18), ledit cache (7) étant apte à se déplacer dans les deux sens entre une position fermée et une position ouverte, simultanément avec le déplacement de ladite caméra (2), ledit cache (7) étant apte à se diviser en deux parties (7a) et (7b) par un déplacement longitudinal suivant un premier axe (X), perpendiculaire à un deuxième axe (Y), desdites parties, ladite caméra (2) étant apte à se déplacer suivant le deuxième axe transversal (Y) par rapport au déplacement desdites parties (7a) et ( 7b), ledit actionneur (18) comprenant un moteur (19) relié à une roue dentée (20) par l'intermédiaire d'une came (21), ladite roue dentée (20) étant en contact avec une vis dentée (22), la transposition d'une position rétractée à une position de capture de ladite caméra (2) s'effectuant par le moyen de bielles (4) et ( 5), lesdites bielles (4, 5) étant reliées entre elles par l'intermédiaire dudit support (3) par des moyens de fixation (6a, 6b),
**caractérisé en ce que** le déplacement dudit cache (7) de la position fermée à la position ouverte se fait par le moyen desdites bielles (4, 5) et **en ce que** la vis dentée (22) est fixée à l'arrière du support (3), la liaison entre la vis (22) et le support (3) étant libre en rotation mais solidaire en translation, ladite vis dentée (22) étant apte à déplacer ladite caméra (2) selon un mouvement translatoire, en entraînant la poussée du support (3) auquel ladite vis dentée (22) est fixée et donc le déplacement de la caméra (2) de sa position rétractée à sa position de capture.

2. Dispositif (1) pour véhicule motorisé selon la revendication 1, **caractérisé en ce que** lesdites bielles (4,) et ( 5) sont reliées audit cache (7) par des moyens de fixation (6c) et ( 6d).

3. Dispositif (1) pour véhicule motorisé selon la revendication 1 ou 2, **caractérisé en ce que** lesdits moyens de fixation (6) sont aptes à se déplacer selon un chemin déterminé (10).

4. Dispositif (1) pour véhicule motorisé selon les revendications 1 à 3, **caractérisé en ce que** lesdits moyens de fixation (6a) et (6b) sont des tiges aptes à s'insérer dans des évidements traversant ledit support (3) et lesdits moyens de fixation (6c) et (6d) sont des tiges aptes à s'insérer dans des évidements traversant ledit cache (7).

5. Dispositif (1) pour véhicule motorisé selon la revendication 3, **caractérisé en ce que** ledit chemin (10) a une forme de L.

6. Dispositif (1) pour véhicule motorisé selon l'une quelconque des revendications précédentes, **caractérisé en ce que** ledit cache (7) se divise en deux parties (7a) et (7b) en son milieu lorsqu'il passe d'une position fermée à une position ouverte.

7. Dispositif (1) pour véhicule motorisé selon l'une quelconque des revendications précédentes, **caractérisé en ce que** l'extrémité de contact de l'une des parties dudit cache (7) a une forme en V et l'autre extrémité de contact de l'autre partie dudit cache (7) a une forme complémentaire à la forme en V de sorte que les deux extrémités desdites parties (7a) et (7b) sont apte à s'emboîter lors de la position fermée dudit cache (7).

8. Dispositif (1) pour véhicule motorisé selon l'une quelconque des revendications précédentes, **caractérisé en ce que** le déplacement dudit dispositif (1) est effectué par un activateur tel que la position marche arrière d'un véhicule ou un bouton d'activation.

9. Dispositif (1) pour véhicule motorisé selon l'une quelconque des revendications précédentes, **caractérisé en ce que** ladite caméra (2) se transpose de la position rétractée à la position de capture par un mouvement de translation apte à faire passer ladite caméra (2) à travers un orifice de logo (9) de véhicule.

10. Dispositif (1) pour véhicule motorisé selon les revendications 1 à 9, **caractérisé en ce que** ledit cache (7) est confondu avec un logo (9) de véhicule et apte à se diviser en deux parties (7a) et (7b) afin de permettre à la caméra (2) de passer de la position rétractée à la position de capture simultanément à la division des deux parties (7a) et (7b).

11. Dispositif (1) pour véhicule motorisé selon l'une quelconque des revendications précédentes, **caractérisé en ce qu'**un joint (8) est interposé entre ledit dispositif (1) et un logo (9) de véhicule, ledit joint (8) reposant sur une surface plane d'une tôle (25) métallique appartenant à un ouvrant arrière dudit véhicule.

12. Dispositif (1) pour véhicule motorisé selon l'une quelconque des revendications précédentes, **caractérisé en ce que** ladite caméra (2) est apte à être inclinée selon un troisième axe (X) perpendiculaire par rapport au déplacement de ladite caméra (2) par l'intermédiaire d'un dispositif de réglage (17).

13. Dispositif (1) pour véhicule motorisé selon l'une quelconque des revendications précédentes, **caractérisé en ce que** ladite caméra (2) est disposée entre le moteur (19) et le cache (7).

14. Dispositif (1) pour véhicule motorisé selon l'une quelconque des revendications 1 à 12, **caractérisé en ce que** ledit moteur (19) est disposé autour de la caméra (2) et sur un plan perpendiculaire à l'axe de déplacement de ladite caméra (2), ladite caméra (2) et ledit moteur (19) étant coplanaires.

## Patentansprüche

1. Vorrichtung (1) für ein motorisiertes Fahrzeug, die eine Kamera (2) umfasst, welche an einer Halterung (3) montiert ist, wobei die Kamera (2) durch einen Aktor (18) aus einer eingefahrenen Stellung durch eine Abdeckung (7) hindurch in eine Aufnahmestellung überführt werden kann, wobei die Abdeckung (7) in der Lage ist, sich gleichzeitig mit der Bewegung der Kamera (2) in beide Richtungen zwischen einer geschlossenen Stellung und einer offenen Stellung zu bewegen, wobei die Abdeckung (7) in der Lage ist, sich durch eine Längsbewegung entlang einer ersten Achse (X), welche zu einer zweiten Achse (Y) der Teile senkrecht steht, in zwei Teile (7a) und (7b) zu teilen, wobei die Kamera (2) in der Lage ist, sich in Bezug auf die Bewegung der Teile (7a) und (7b) entlang der zweiten Querachse (Y) zu bewegen, wobei der Aktor (18) einen Motor (19) umfasst, der mittels eines Nockens (21) mit einem Zahnrad (20) verbunden ist, wobei das Zahnrad (20) mit einer Zahnschraube (22) in Kontakt steht, wobei das Überführen der Kamera (2) aus einer eingefahrenen Stellung in eine Aufnahmestellung vermittels Pleueln (4) und (5) erfolgt, wobei die Pleuel (4, 5) durch Befestigungsmittel (6a, 6b) mittels der Halterung (3) miteinander verbunden sind,
**dadurch gekennzeichnet, dass** die Bewegung der Abdeckung (7) aus der geschlossenen Stellung in die offene Stellung vermittels der Pleuel (4, 5) geschieht, und dadurch, dass die Zahnschraube (22) an der Rückseite der Halterung (3) befestigt ist, wobei die Verbindung zwischen der Schraube (22) und der Halterung (3) frei drehbar aber verschiebefest ist, wobei die Zahnschraube (22) in der Lage ist, die Kamera (2) gemäß einer Verschiebebewegung zu bewegen, indem sie den Schub der Halterung (3), an der die Zahnschraube (22) befestigt ist, und damit die Bewegung der Kamera (2) aus ihrer eingefahrenen Stellung in ihre Aufnahmestellung bewirkt.

2. Vorrichtung (1) für ein motorisiertes Fahrzeug nach Anspruch 1, **dadurch gekennzeichnet, dass** die Pleuel (4) und (5) durch Befestigungsmittel (6c) und (6d) mit der Abdeckung (7) verbunden sind.

3. Vorrichtung (1) für ein motorisiertes Fahrzeug nach Anspruch 1 oder 2, **dadurch gekennzeichnet, dass** die Befestigungsmittel (6) in der Lage sind, sich gemäß einem bestimmten Weg (10) zu bewegen.

4. Vorrichtung (1) für ein motorisiertes Fahrzeug nach den Ansprüchen 1 bis 3, **dadurch gekennzeichnet, dass** es sich bei den Befestigungsmitteln (6a) und (6b) um Stifte handelt, die in der Lage sind, sich in Aussparungen, die durch die Halterung (3) hindurchgehen, einzufügen, und es sich bei den Befestigungsmitteln (6c) und (6d) um Stifte handelt, die in der Lage sind, sich in Aussparungen, die durch die Abdeckung (7) hindurchgehen, einzufügen.

5. Vorrichtung (1) für ein motorisiertes Fahrzeug nach Anspruch 3, **dadurch gekennzeichnet, dass** der Weg (10) eine L-Form aufweist.

6. Vorrichtung (1) für ein motorisiertes Fahrzeug nach einem der vorstehenden Ansprüche, **dadurch gekennzeichnet, dass** sich die Abdeckung (7) in ihrer Mitte in zwei Teile (7a) und (7b) teilt, wenn sie aus einer geschlossenen Stellung in eine offene Stellung übergeht.

7. Vorrichtung (1) für ein motorisiertes Fahrzeug nach einem der vorstehenden Ansprüche, **dadurch gekennzeichnet, dass** das Kontaktende eines der Teile der Abdeckung (7) eine V-Form aufweist, und das andere Kontaktende des anderen Teils der Abdeckung (7) eine zur V-Form komplementäre Form aufweist, sodass die zwei Enden der Teile (7a) und (7b) in der Lage sind, sich bei der geschlossenen Stellung der Abdeckung (7) ineinanderzufügen.

8. Vorrichtung (1) für ein motorisiertes Fahrzeug nach einem der vorstehenden Ansprüche, **dadurch gekennzeichnet, dass** die Bewegung der Vorrichtung (1) durch einen Aktivierer wie etwa die Rückwärtsgang-Stellung eines Fahrzeugs oder eine Aktivierungstaste erfolgt.

9. Vorrichtung (1) für ein motorisiertes Fahrzeug nach einem der vorstehenden Ansprüche, **dadurch gekennzeichnet, dass** die Kamera (2) durch eine Verschiebebewegung, die in der Lage ist, die Kamera (2) durch eine Emblemöffnung (9) des Fahrzeugs hindurchzubringen, aus der eingefahrenen Stellung in die Aufnahmestellung überführt wird.

10. Vorrichtung (1) für ein motorisiertes Fahrzeug nach den Ansprüchen 1 bis 9, **dadurch gekennzeichnet, dass** die Abdeckung (7) mit einem Fahrzeugemblem (9) kombiniert und in der Lage ist, sich in zwei Teile (7a) und (7b) zu teilen, um es der Kamera (2) zu ermöglichen, gleichzeitig mit dem Teilen der zwei Teile (7a) und (7b) aus der eingefahrenen Stellung in die Aufnahmestellung zu gelangen.

11. Vorrichtung (1) für ein motorisiertes Fahrzeug nach einem der vorstehenden Ansprüche, **dadurch gekennzeichnet, dass** zwischen der Vorrichtung (1) und einem Fahrzeugemblem (9) eine Dichtung (8) eingesetzt ist, wobei die Dichtung (8) auf einer ebenen Fläche eines zu einer Heckklappe des Fahrzeugs gehörenden Metallblechs (25) ruht.

12. Vorrichtung (1) für ein motorisiertes Fahrzeug nach einem der vorstehenden Ansprüche, **dadurch gekennzeichnet, dass** die Kamera (2) in der Lage ist, mittels einer Einstellvorrichtung (17) entlang einer dritten Achse (X), die in Bezug auf die Bewegung der Kamera (2) senkrecht verläuft, geneigt zu werden.

13. Vorrichtung (1) für ein motorisiertes Fahrzeug nach einem der vorstehenden Ansprüche, **dadurch gekennzeichnet, dass** die Kamera (2) zwischen dem Motor (19) und der Abdeckung (7) angeordnet ist.

14. Vorrichtung (1) für ein motorisiertes Fahrzeug nach einem der Ansprüche 1 bis 12, **dadurch gekennzeichnet, dass** der Motor (19) um die Kamera (2) herum und in einer zur Bewegungsachse der Kamera (2) senkrechten Ebene angeordnet ist, wobei die Kamera (2) und der Motor (19) komplanar sind.

## Claims

1. A device (1) for a motor-driven vehicle comprising a camera (2) mounted on a support (3), said camera (2) being transposable from a retracted position to a capture position through a cover (7) by an actuator (18), said cover (7) being able to be displaced in both directions between a closed position and an open position, simultaneously with the displacement of said camera (2), said cover (7) being able to be split into two portions (7a) and (7b) by a longitudinal displacement along a first axis (X), perpendicular to a second axis (Y), of said portions, said camera (2) being able to be displaced along the second axis (Y) transverse relative to the displacement of said portions (7a) and (7b), said actuator (18) comprising a motor (19) connected to a toothed wheel (20) via a cam (21), said toothed wheel (20) being in contact with a toothed screw (22), the transposition from a retracted position to a capture position of said camera (2) is performed by means of connecting rods (4) and (5), said connecting rods (4, 5) being interconnected via said support (3) by fastening means (6a, 6b),
**characterized in that** the displacement of said cover (7) from the closed position to the open position is performed by means of said connecting rods (4, 5) and **in that** the toothed screw (22) is fastened to the backside of the support (3), the connection between the screw (22) and the support (3) being free in rotation but secured in translation, said toothed screw (22) being able to displace said camera (2) according to a translational movement, by causing the push of the support (3) to which said toothed screw (22) is fastened and therefore the displacement of the camera (2) from its retracted position to its capture position.

2. The device (1) for a motor-driven vehicle according to claim 1, **characterized in that** said connecting rods (4) and (5) are connected to said cover (7) by fastening means (6c) and (6d).

3. The device (1) for a motor-driven vehicle according to claim 1 or 2, **characterized in that** said fastening means (6) are able to be displaced along a determined path (10).

4. The device (1) for a motor-driven vehicle according to claims 1 to 3, **characterized in that** said fastening means (6a) and (6b) are rods capable of being inserted into recesses passing through said support (3) and said fastening means (6c) and (6d) are rods capable of being inserted into recesses passing through said cover (7).

5. The device (1) for a motor-driven vehicle according to claim 3, **characterized in that** said path (10) is L-shaped.

6. The device (1) for a motor-driven vehicle according to any one of the preceding claims, **characterized in that** said cover (7) is split into two portions (7a) and (7b) at its middle when it passes from a closed position to an open position.

7. The device (1) for a motor-driven vehicle according to any one of the preceding claims, **characterized in that** the contact end of one of the portions of said cover (7) has a V-shape and the other contact end of the other portion of said cover (7) has a shape complementary to the V-shape such that the two ends of said portions (7a) and (7b) are able to nest into each other when said cover (7) is in its closed position.

8. The device (1) for a motor-driven vehicle according to any one of the preceding claims, **characterized in that** the displacement of said device (1) is performed by an activator such as the reverse position of a vehicle or an activation button.

9. The device (1) for a motor-driven vehicle according to any one of the preceding claims, **characterized in that** said camera (2) is transposed from the retracted position to the capture position by a translational movement capable of causing said camera (2) to pass through a vehicle logo orifice (9).

10. The device (1) for a motor-driven vehicle according to claims 1 to 9, **characterized in that** said cover (7) coincides with a vehicle logo (9) and is able to be split into two portions (7a) and (7b) in order to allow the camera (2) to pass from the retracted position to the capture position simultaneously with the split-up of the two portions (7a) and (7b).

11. The device (1) for a motor-driven vehicle according to any one of the preceding claims, **characterized in that** a seal (8) is interposed between said device (1) and a vehicle logo (9), said seal (8) resting on a planar surface of a metal sheet (25) belonging to a rear door leaf of said vehicle.

12. The device (1) for a motor-driven vehicle according to any one of the preceding claims, **characterized in that** said camera (2) is able to be inclined along a third axis (X) perpendicular to the displacement of said camera (2) via a setting device (17).

13. The device (1) for a motor-driven vehicle according to any one of the preceding claims, **characterized in that** said camera (2) is disposed between the motor (19) and the cover (7).

14. The device (1) for a motor-driven vehicle according to any one of claims 1 to 12, **characterized in that** said motor (19) is disposed around the camera (2) and on a plane perpendicular to the axis of displacement of said camera (2), said camera (2) and said motor (19) being coplanar.
